(19) **Europäisches Patentamt** / **European Patent Office** / **Office européen des brevets**

(11) **EP 4 656 600 A1**

(12) **EUROPEAN PATENT APPLICATION**
published in accordance with Art. 153(4) EPC

(43) Date of publication:
**03.12.2025 Bulletin 2025/49**

(21) Application number: **24747329.1**

(22) Date of filing: **24.01.2024**

(51) International Patent Classification (IPC):
**C02F 1/28** (2023.01)     **B01J 20/20** (2006.01)

(52) Cooperative Patent Classification (CPC):
**B01J 20/20; C02F 1/28**

(86) International application number:
**PCT/JP2024/002016**

(87) International publication number:
**WO 2024/158002 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.01.2023 JP 2023009133**

(71) Applicant: **Unitika Ltd.**
**Osaka-shi, Osaka 541-8566 (JP)**

(72) Inventors:
• **KAWACHI, Akinori**
  **Uji-shi, Kyoto 611-0021 (JP)**
• **SUGAHARA, Kazuomi**
  **Uji-shi, Kyoto 611-0021 (JP)**
• **FUJIKI, Hironori**
  **Uji-shi, Kyoto 611-0021 (JP)**

(74) Representative: **Müller-Boré & Partner
Patentanwälte PartG mbB
Friedenheimer Brücke 21
80639 München (DE)**

(54) **FILTER**

(57)     The main objective of the present invention is to provide a filter having excellent performance in removing fluorine-containing organic compounds even when the superficial velocity (SV) of water to be treated is high. A filter according to the present invention includes an activated carbon molded body containing activated carbon. Among pore volumes calculated by a QSDFT method, the activated carbon molded body has a pore volume A(cc/g) of at least 0.30 cc/g of pores having a pore diameter of 2.0 nm or less, and has a pore volume B(cc/g) of at least 0.01 cc/g of pores having a pore diameter of 3.0-3.5 nm.

## Description

Technical Field

The present invention relates to a filter including an activated carbon molded body containing activated carbon as a constituent member.

Background Art

In recent years, there has been an increasing interest in safety and health related to the water quality of tap water, and it is desired to remove various harmful substances. In terms of water quality management, examples of substances that may adversely affect health include, in particular, perfluoroalkylsulfonic acid typified by perfluorooctanesulfonic acid (PFOS) and perfluoroalkylcarboxylic acid typified by perfluorooctanoic acid (PFOA), and efforts to remove these from drinking water and the like for reducing health and environmental risks have started worldwide. In Japan, from the viewpoint of appropriately performing water quality management in a water purification plant, a target value (provisional) of 50 ng/L as the sum of PFOS and PFOA is set as PFOS and PFOA from April 1, 2020, and the position of PFOS and PFOA is changed from "to-be-examined item" to "water quality management target setting item" ("Regarding Partial Amendment to Ministerial Ordinance Concerning Water Quality Standards (Enforcement Notice)" Vol. 0330 No. 1, issued on March 30, 2020, by the Commissioner of Living Health and Food Safety, Minister's Secretariat of Ministry of Health, Labour and Welfare).

Conventionally, as a technique for removing a fluorine-containing organic compound (perfluoroalkyl compound and polyfluoroalkyl compound, hereinafter, also referred to as "PFAS") from water to be treated (water as a treatment target), a technique using a filter containing activated carbon has been proposed. For example, patent literature 1 discloses a fluorine-containing organic compound removing material made of a carbonaceous material in which a benzene adsorption amount is 30 to 60%, a vitamin B12 adsorption amount is more than 50.0 mg/g, and a pore volume of mesopores calculated from a nitrogen adsorption isotherm by a BJH method is 0.13 to 0.30 cm$^3$/g. It is described that the removing material has high performance in removing PFAS (PFOS, PFOA, or the like), which can also be used for water purifiers.

Citation List

Patent Literature

Patent Literature 1: WO 2022/085550 A

Summary of Invention

Technical Problem

Patent literature 1 describes that the pore volume of mesopores (pores having a pore diameter in a range of 2 to 50 nm) of a carbonaceous material is in a range of 0.130 to 0.30 cm$^3$/g, thereby making the carbonaceous material more suitable for adsorption of PFAS. However, as a result of examination by the present inventors, it has been found that when the superficial velocity (SV) of water to be treated is high in filtration (for example, when the SV is about 2500 h$^{-1}$), performance in removing a fluorine-containing organic compound may not be sufficient simply by setting the pore volume of mesopores to the above range.

Therefore, a main object of the present invention is to solve the above problems and to provide a filter having excellent performance in removing a fluorine-containing organic compound even when a superficial velocity (SV) of water to be treated is high.

Solution to Problem

The present inventors have studied the above problems. One document states that the molecular size of PFAS is 2 nm or less. From this, it is considered that it is effective to increase the volume of pores having a pore diameter of 1.0 nm or less at first glance. However, as a result of repeated studies by the present inventors, they have found that when the superficial velocity (SV) of water to be treated is high (for example, when the SV is about 2500 h$^{-1}$), it is important to set the pore volume of pores having a pore diameter of 2 nm or less to a specific value or more in the filter and to include pores having a specific pore diameter range among mesopores, that is, pores having a pore diameter of 3.0 to 3.5 nm, and it is important to control the pore volume of pores having a pore diameter of 3.0 to 3.5 nm to a specific value or more. The present invention is the invention based on these findings and completed by conducting further studies.

That is, the present invention provides inventions of the following aspects.

Item 1. A filter including an activated carbon molded body containing activated carbon, wherein among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter in a range of 3.0 to 3.5 nm.

Item 2. The filter according to item 1, wherein the activated carbon molded body has a pore volume of 0.015 cc/g or more and 0.08 cc/g or less of pores having a pore diameter of 0.65 nm or less among the pore volumes calculated by the QSDFT method.

Item 3. The filter according to item 1 or 2, wherein the activated carbon molded body has a pore volume of 0.15 cc/g or more and 0.35 cc/g or less of pores having a pore diameter of 1.0 nm or less among the pore volumes calculated by the QSDFT method.

Item 4. The filter according to any one of items 1 to 3, wherein the activated carbon molded body has a pore volume of 0.25 cc/g or more and 0.5 cc/g or less of pores having a pore diameter of 1.5 nm or less among the pore volumes calculated by the QSDFT method.

Item 5. The filter according to any one of items 1 to 4, wherein the activated carbon molded body has a pore volume C of 0.05 cc/g or more and 0.8 cc/g or less of pores having a pore diameter of 2.0 nm or more among the pore volumes calculated by the QSDFT method.

Item 6. The filter according to any one of items 1 to 5, wherein the activated carbon molded body has a pore volume of 0.05 cc/g or more and 0.1 cc/g or less of pores having a pore diameter in a range of 0.65 to 0.8 nm among the pore volumes calculated by the QSDFT method.

Item 7. The filter according to any one of items 1 to 6, wherein the activated carbon molded body has a pore volume of 0.05 cc/g or more and 0.25 cc/g or less of pores having a pore diameter in a range of 0.8 to 1.0 nm among the pore volumes calculated by the QSDFT method.

Item 8. The filter according to any one of items 1 to 7, wherein the activated carbon molded body has a pore volume of 0.08 cc/g or more and 0.20 cc/g or less of pores having a pore diameter in a range of 1.0 to 1.5 nm among the pore volumes calculated by the QSDFT method.

Item 9. The filter according to any one of items 1 to 8, wherein the activated carbon molded body has a pore volume of 0.001 cc/g or more and 0.08 cc/g or less of pores having a pore diameter in a range of 1.3 to 1.5 nm among the pore volumes calculated by the QSDFT method.

Item 10. The filter according to any one of items 1 to 9, wherein the activated carbon molded body has a pore volume of 0.001 cc/g or more and 0.10 cc/g or less of pores having a pore diameter in a range of 1.5 to 2.0 nm among the pore volumes calculated by the QSDFT method.

Item 11. The filter according to any one of items 1 to 10, wherein the activated carbon molded body has a pore volume of 0.1 cc/g or less of pores having a pore diameter in a range of 2.0 to 2.5 nm among the pore volumes calculated by the QSDFT method.

Item 12. The filter according to any one of items 1 to 11, wherein the activated carbon molded body has a pore volume of 0.15 cc/g or less of pores having a pore diameter in a range of 2.5 to 3.0 nm among the pore volumes calculated by the QSDFT method.

Item 13. The filter according to any one of items 1 to 12, wherein the activated carbon molded body has a pore volume of 0.1 cc/g or less of pores having a pore diameter in a range of 3.5 to 4.0 nm among the pore volumes calculated by the QSDFT method.

Item 14. The filter according to any one of items 1 to 13, wherein the activated carbon molded body has a pore volume of 0.01 cc/g or more and 0.35 cc/g or less of pores having a pore diameter in a range of 3.0 to 4.0 nm among the pore volumes calculated by the QSDFT method.

Item 15. The filter according to any one of items 1 to 14, wherein the activated carbon molded body has a pore volume of 0.1 cc/g or less of pores having a pore diameter in a range of 4.0 to 4.5 nm among the pore volumes calculated by the QSDFT method.

Item 16. The filter according to any one of items 1 to 15, wherein the activated carbon molded body has a pore volume of 0.05 cc/g or more and 0.13 cc/g or less of pores having a pore diameter in a range of 4.0 nm or more among the pore volumes calculated by the QSDFT method.

Item 17. The filter according to any one of items 1 to 16, wherein the activated carbon molded body has a total pore volume T calculated by the QSDFT method of 0.4 cc/g or more and 1.2 cc/g or less.

Item 18. The filter according to any one of items 1 to 17, wherein the activated carbon molded body has a ratio (A/T) of the pore volume A (cc/g) of pores having a pore diameter of 2.0 nm or less among the pore volumes calculated by the QSDFT method to the total pore volume T (cc/g) calculated by the QSDFT method of 0.3 to 0.9.

Item 19. The filter according to any one of items 1 to 18, wherein the activated carbon molded body has a ratio (B/T) of the pore volume B (cc/g) of pores having a pore diameter in a range of 3.0 to 3.5 nm among the pore volumes calculated by the QSDFT method to the total pore volume T (cc/g) calculated by the QSDFT method of 0.02 to 0.25.

Item 20. The filter according to any one of items 1 to 19, wherein the activated carbon molded body has a ratio (B/A) of the pore volume B (cc/g) of pores having a pore diameter in a range of 3.0 to 3.5 nm among the pore volumes calculated by the QSDFT method to the pore volume A (cc/g) of pores having a pore diameter of 2.0 nm or less among the pore volumes calculated by the QSDFT method of 0.02 to 0.6.

Item 21. The filter according to any one of items 1 to 20, wherein the activated carbon molded body has a ratio (B/C) of the pore volume B (cc/g) of pores having a pore diameter in a range of 3.0 to 3.5 nm among the pore volumes calculated by the QSDFT method to the pore volume C (cc/g) of pores having a pore diameter of 2.0 nm or more among the pore volumes calculated by the QSDFT method of 0.15 to 0.4.

Item 22. The filter according to any one of items 1 to 21, wherein the activated carbon molded body has a mesopore volume ratio of 10 to 70%.

Item 23. The filter according to any one of items 1 to 22, wherein the activated carbon molded body has a specific surface area of 700 to 1600 $m^2$/g.

Item 24. The filter according to any one of items 1 to 23, wherein a filtered water amount per 1 $cm^3$ of the activated carbon molded body as measured by the following method is 15 L/$cm^3$ or more.

<Measurement method>

The filtered water amount is measured by the following method in accordance with NSF/ANSI 53-2021 (DRINKING WATER TREATMENT UNITS-HEALTH EFFECTS, Standard by NSF International, based in Michigan, USA). The filter is loaded into a stainless steel housing. A mixture (pH = 7.5 $\pm$ 0.5, temperature: 20 $\pm$ 2.5°C, sulfate ion: 200 $\pm$ 40 mg/L, chloride ion: 100 $\pm$ 20 mg/L, alkalinity: 200 $\pm$ 40 mg/L, turbidity: less than 1 NTU) obtained by adding perfluorooctanesulfonic acid (PFOS) and perfluorooctanoic acid (PFOA) to tap water having a total organic matter concentration (TOC) (organic matter concentration converted to carbon (C), measured by a TOC meter) of 0.5 mg/L or less through an activated carbon filter and a hollow fiber membrane so that a concentration of PFOA is 0.0005 $\pm$ 0.00005 mg/L and a concentration of PFOS is 0.001 $\pm$ 0.00010 mg/L is used as adjusted raw water. The adjusted raw water is continuously passed through the filter loaded in the stainless steel housing at a filtration flow rate of 2 L/min, and the concentrations of PFOS and PFOA before and after passing through the filter are quantitatively measured by solid phase extraction-liquid chromatography-mass spectrometry. A point at which a total concentration in water of PFOS and PFOA in outflow water is 0.00007 mg/L or more is defined as a breakthrough point, and a total filtered water amount (L) until the breakthrough point is determined. A value obtained by dividing the obtained total filtered water amount (L) by a volume ($cm^3$) of the activated carbon molded body constituting the filter is taken as a filtered water amount (L/$cm^3$) per 1 $cm^3$ of the activated carbon molded body constituting the filter.

Item 25. The filter according to any one of items 1 to 24, wherein a filtered water amount per 1 g of the activated carbon contained in the activated carbon molded body as measured by the following method is 30 L/g or more.

<Measurement method>

The filtered water amount is measured by the following method in accordance with NSF/ANSI 53-2021 (DRINKING WATER TREATMENT UNITS-HEALTH EFFECTS, Standard by NSF International, based in Michigan, USA). The filter is loaded into a stainless steel housing. A mixture (pH = 7.5 $\pm$ 0.5, temperature: 20 $\pm$ 2.5°C, sulfate ion: 200 $\pm$ 40 mg/L, chloride ion: 100 $\pm$ 20 mg/L, alkalinity: 200 $\pm$ 40 mg/L, turbidity: less than 1 NTU) obtained by adding perfluorooctanesulfonic acid (PFOS) and perfluorooctanoic acid (PFOA) to tap water having a total organic matter concentration (TOC) (organic matter concentration converted to carbon (C), measured by a TOC meter) of 0.5 mg/L or less through an activated carbon filter and a hollow fiber membrane so that a concentration of PFOA is 0.0005 $\pm$ 0.00005 mg/L and a concentration of PFOS is 0.001 $\pm$ 0.00010 mg/L is used as adjusted raw water. The adjusted raw water is continuously passed through the filter loaded in the stainless steel housing at a filtration flow rate of 2 L/min, and the concentrations of PFOS and PFOA before and after passing through the filter are quantitatively measured by solid phase extraction-liquid chromatography-mass spectrometry. A point at which a total concentration in water of PFOS and PFOA in outflow water is 0.00007 mg/L or more is defined as a breakthrough point, and a total filtered water amount (L) until the breakthrough point is determined. A value obtained by dividing the obtained total filtered water amount (L) by a total weight of the activated carbon contained in the activated carbon molded body constituting the filter is taken as a filtered water amount (L/g) per 1 g of the activated carbon contained in the activated carbon molded body constituting the filter.

Item 26. The filter according to any one of items 1 to 25, wherein a filtered water amount per 1 $cm^3$ of the activated carbon molded body as measured by the following method is 4 L/$cm^3$ or more.

<Measurement method>

The filtered water amount is measured by the following method in accordance with NSF/ANSI 53-2022 (DRINKING WATER TREATMENT UNITS-HEALTH EFFECTS, Standard by NSF International, based in Michigan, USA). The filter is loaded into a stainless steel housing. A mixture (pH = 7.5 $\pm$ 0.5, temperature: 20 $\pm$ 2.5°C, sulfate ion: 200 $\pm$ 40 mg/L, chloride ion: 100 $\pm$ 20 mg/L, alkalinity: 200 $\pm$ 40 mg/L, turbidity: less than 1 NTU) obtained by adding perfluorooctanesulfonic acid (PFOS) and perfluorooctanoic acid (PFOA) to tap water having a total organic matter concentration (TOC) (organic matter concentration converted to carbon (C), measured by a TOC meter) of 0.5 mg/L or less through an activated carbon filter and a hollow fiber membrane so that a concentration of PFOA is 0.0005 $\pm$ 0.00005 mg/L and a concentration of PFOS is 0.001 $\pm$ 0.00010 mg/L is used as adjusted raw water. The adjusted raw water is continuously passed through the filter loaded in the stainless steel housing at a filtration flow rate of 2 L/min, and the concentrations of PFOS and PFOA before and after passing through the filter are quantitatively measured by solid phase extraction-liquid chromatography-mass spectrometry. A point at which a total concentration in water of PFOS and PFOA in outflow water is 0.00002 mg/L or more is defined as a breakthrough point, and a total filtered water amount (L) until the breakthrough point is determined. A value obtained by dividing the obtained total filtered water amount (L) by a volume (cm$^3$) of the activated carbon molded body constituting the filter is taken as a filtered water amount (L/cm$^3$) per 1 cm$^3$ of the activated carbon molded body constituting the filter.

Item 27. The filter according to any one of items 1 to 26, wherein a filtered water amount per 1 g of the activated carbon contained in the activated carbon molded body as measured by the following method is 10 L/g or more.

<Measurement method>

The filtered water amount is measured by the following method in accordance with NSF/ANSI 53-2022 (DRINKING WATER TREATMENT UNITS-HEALTH EFFECTS, Standard by NSF International, based in Michigan, USA). The filter is loaded into a stainless steel housing. A mixture (pH = 7.5 $\pm$ 0.5, temperature: 20 $\pm$ 2.5°C, sulfate ion: 200 $\pm$ 40 mg/L, chloride ion: 100 $\pm$ 20 mg/L, alkalinity: 200 $\pm$ 40 mg/L, turbidity: less than 1 NTU) obtained by adding perfluorooctanesulfonic acid (PFOS) and perfluorooctanoic acid (PFOA) to tap water having a total organic matter concentration (TOC) (organic matter concentration converted to carbon (C), measured by a TOC meter) of 0.5 mg/L or less through an activated carbon filter and a hollow fiber membrane so that a concentration of PFOA is 0.0005 $\pm$ 0.00005 mg/L and a concentration of PFOS is 0.001 $\pm$ 0.00010 mg/L is used as adjusted raw water. The adjusted raw water is continuously passed through the filter loaded in the stainless steel housing at a filtration flow rate of 2 L/min, and the concentrations of PFOS and PFOA before and after passing through the filter are quantitatively measured by solid phase extraction-liquid chromatography-mass spectrometry. A point at which a total concentration in water of PFOS and PFOA in outflow water is 0.00002 mg/L or more is defined as a breakthrough point, and a total filtered water amount (L) until the breakthrough point is determined. A value obtained by dividing the obtained total filtered water amount (L) by a total weight of the activated carbon contained in the activated carbon molded body constituting the filter is taken as a filtered water amount (L/g) per 1 g of the activated carbon contained in the activated carbon molded body constituting the filter.

Item 28. The filter according to any one of items 1 to 27, which is used for removing a fluorine-containing organic compound in water to be treated.

Item 29. The filter according to item 28, wherein the water to be treated is tap water.

Item 30. The filter according to item 28 or 29, wherein the fluorine-containing organic compound contains perfluorooctanesulfonic acid and/or perfluorooctanoic acid.

Item 31. A method for removing a fluorine-containing organic compound, the method including a step of removing a fluorine-containing organic compound in water to be treated containing a fluorine-containing organic compound by passing the water to be treated through a filter including an activated carbon molded body containing activated carbon, in which among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter of 3.0 to 3.5 nm.

Item 32. The method for removing a fluorine-containing organic compound according to item 31, wherein the water to be treated is allowed to pass under the condition of a superficial velocity (SV) of 2500 h$^{-1}$ or more.

Item 33. Use of a filter for removing a fluorine-containing organic compound in water to be treated, the filter including an activated carbon molded body containing activated carbon, in which among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter in a range of 3.0 to 3.5 nm.

Item 34. Use of an activated carbon molded body for producing a fluorine-containing organic compound removing filter, the activated carbon molded body containing activated carbon, in which among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter in a range of 3.0 to 3.5 nm.

Item 35. A method for producing the filter according to any one of items 1 to 30, the method including a step of flowing a slurry containing at least activated carbon on a net, dewatering the slurry, and drying the slurry to produce a sheet-shaped molded body.

Item 36. A method for producing the filter according to any one of items 1 to 30, the method including a step of immersing a molding die frame in a slurry containing at least activated carbon, the molding die frame including a core body having a large number of suction small holes on a surface thereof, flanges detachable at both ends thereof, and a filtrate discharge port at one end thereof, filtering the slurry while sucking the slurry from the filtrate discharge port through the suction small holes, attaching the slurry to a surface of the core body to obtain a slurry molded body, taking out the obtained slurry molded body from the molding die frame, and drying the slurry molded body to produce an activated carbon molded body.

Item 37. A method for producing the filter according to any one of items 1 to 30, the method including a step of immersing a molding die frame in a slurry containing at least activated carbon, the molding die frame including a core body having a large number of suction small holes on a surface thereof, a non-woven fabric core provided on the core body, flanges detachable at both ends thereof, and a filtrate discharge port at one end thereof, filtering the slurry while sucking the slurry from the filtrate discharge port through the suction small holes, attaching the slurry to a surface of the non-woven fabric core to obtain a slurry molded body, taking out the obtained slurry molded body from the molding die frame, and drying the slurry molded body to produce a laminated activated carbon molded body including the non-woven fabric core and the activated carbon molded body.

Item 38. The method for producing the filter according to any one of items 35 to 37, wherein the slurry contains binder fibers.

Item 39. The method for producing the filter according to any one of items 35 to 38, wherein a content of the activated carbon in the slurry is 60 mass% or more with respect to the entire solid content.

Advantageous Effects of Invention

Since the filter of the present invention includes an activated carbon molded body containing activated carbon as a constituent member, in which among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter of 3.0 to 3.5 nm, even when a superficial velocity (SV) of water to be treated is high (for example, when the SV is about 2500 $h^{-1}$), the filter is excellent in performance in removing a fluorine-containing organic compound.

Brief Description of Drawings

[Fig. 1] Fig. 1 is a graph showing a log differential pore volume distribution calculated by a QSDFT method of an activated carbon molded body constituting a filter of Example 1.

[Fig. 2] Fig. 2 is a graph showing a log differential pore volume distribution calculated by a QSDFT method of an activated carbon molded body constituting a filter of Example 2.

[Fig. 3] Fig. 3 is a graph showing a log differential pore volume distribution calculated by a QSDFT method of an activated carbon molded body constituting a filter of Example 3.

[Fig. 4] Fig. 4 is a graph showing a log differential pore volume distribution calculated by a QSDFT method of an activated carbon molded body constituting a filter of Comparative Example 1.

[Fig. 5] Fig. 5 is a graph showing a log differential pore volume distribution calculated by a QSDFT method of an activated carbon molded body constituting a filter of Comparative Example 2.

[Fig. 6] Fig. 6 is a graph showing an integrated pore volume distribution calculated by a QSDFT method of an activated carbon molded body constituting a filter of Example 1.

[Fig. 7] Fig. 7 is a graph showing an integrated pore volume distribution calculated by a QSDFT method of an activated carbon molded body constituting a filter of Example 2.

[Fig. 8] Fig. 8 is a graph showing an integrated pore volume distribution calculated by a QSDFT method of an activated carbon molded body constituting a filter of Example 3.

[Fig. 9] Fig. 9 is a graph showing an integrated pore volume distribution calculated by a QSDFT method of an activated carbon molded body constituting a filter of Comparative Example 1.

[Fig. 10] Fig. 10 is a graph showing an integrated pore volume distribution calculated by a QSDFT method of an activated carbon molded body constituting a filter of Comparative Example 2.

[Fig. 11] Fig. 11 is a schematic view of a molding die frame used in a slurry suction method.

Description of Embodiments

A filter of the present invention is a filter including an activated carbon molded body containing activated carbon, wherein among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter in a range of 3.0 to 3.5 nm. Hereinafter, the filter of the present invention will be described in detail.

<Physical properties of activated carbon molded body>

In the present invention, the pore volume of pores in a specific pore diameter range of the activated carbon molded body is calculated by a QSDFT method. The QSDFT method (quenching solid density functional method) is an analysis method capable of calculating a pore volume distribution from about 0.5 nm to about 40 nm for pore diameter analysis of geometrically and chemically irregular microporous mesoporous carbon. In the QSDFT method, the influence of the roughness and nonuniformity of the pore surface is clearly considered, so that the accuracy of the pore volume distribution analysis is greatly improved. In the present invention, measurement of nitrogen adsorption isotherm and pore volume distribution analysis by a QSDFT method are performed using "AUTOSORB6" manufactured by Quantachrome Instruments. The pore volume of pores in a specific pore diameter range of the activated carbon molded body can be calculated by calculating the pore volume distribution by applying $N_2$ at 77 K on carbon [slit pore, QSDFT equilibrium model] as a calculation model to the desorption isotherm of nitrogen measured at a temperature of 77 K.

Initially, according to the studies of the present inventors, it was considered that a fluorine-containing organic compound such as PFOA is likely to be adsorbed to micropores having a pore diameter of 2.0 nm or less due to its molecular size. However, the present inventors considered that the rate at which the fluorine-containing organic compound molecules diffuse into the pores is also an important factor when considering filtration of the fluorine-containing organic compound molecules under the condition of a large superficial velocity (SV). The present inventors have further studied from these viewpoints, and have found that by controlling the pore diameter of the activated carbon molded body constituting the filter and the pore volume thereof, setting the pore volume of pores having a pore diameter of 2.0 nm or less to be in a specific range, and setting the pore volume of pores having a pore diameter of 3.0 nm or more and 3.5 nm or less as the pores contributing to diffusion into the pores to be in a specific range, a filter having excellent performance in removing a fluorine-containing organic compound can be obtained even under conditions of a high superficial velocity (SV).

The activated carbon molded body constituting the filter of the present invention has a pore volume A (cc/g) of pores having a pore diameter of 2.0 nm or less among pore volumes calculated by a QSDFT method of 0.30 cc/g or more, and from the viewpoint of making the activated carbon molded body more excellent in performance in removing a fluorine-containing organic compound even when a superficial velocity (SV) of water to be treated is high, the pore volume A is preferably 0.35 cc/g or more and 0.80 cc/g or less, and more preferably 0.35 cc/g or more and 0.660 cc/g or less.

The activated carbon molded body constituting the filter of the present invention has a pore volume B (cc/g) of pores having a pore diameter in a range of 3.0 to 3.5 nm among pore volumes calculated by a QSDFT method of 0.01 cc/g or more, and from the viewpoint of making the activated carbon molded body more excellent in performance in removing a fluorine-containing organic compound even when a superficial velocity (SV) of water to be treated is high, the pore volume B is preferably 0.04 cc/g or more and 0.30 cc/g or less, and more preferably 0.15 cc/g or more and 0.25 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 0.65 nm or less among pore volumes calculated by a QSDFT method is preferably 0.015 cc/g or more and 0.08 cc/g or less, and more preferably 0.04 cc/g or more and 0.07 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 1.0 nm or less among pore volumes calculated by a QSDFT method is preferably 0.15 cc/g or more and 0.35 cc/g or less, and more preferably 0.18 cc/g or more and 0.23 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 1.5 nm or less among pore volumes calculated by a QSDFT method is preferably 0.25 cc/g or more and 0.5 cc/g or less, and more preferably 0.27 cc/g or more and 0.35 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume C of pores having a pore diameter in a range of 2.0 nm or more among pore volumes calculated by a QSDFT method is preferably 0.05 cc/g or more and 0.8 cc/g or less, and more preferably 0.2 cc/g or more and 0.6 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 0.65 to 0.8 nm among pore volumes calculated by a QSDFT method is preferably 0.05 cc/g or more and 0.1 cc/g or less, and more preferably 0.055 cc/g or more and 0.063 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 0.8 to 1.0 nm among pore volumes calculated by a QSDFT method is preferably 0.05 cc/g or more and 0.25 cc/g or less, and more preferably 0.06 cc/g or more and 0.10 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 1.0 to 1.5 nm among pore volumes calculated by a QSDFT method is preferably 0.08 cc/g or more and 0.20 cc/g or less, and more preferably 0.08 cc/g or more and 0.16 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 1.3 to 1.5 nm among pore volumes calculated by a QSDFT method is preferably 0.001 cc/g or more and 0.08 cc/g or less, more preferably 0.02 cc/g or more and 0.07 cc/g or less, and further preferably 0.02 cc/g or more and 0.04 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 1.5 to 2.0 nm among pore volumes calculated by a QSDFT method is preferably 0.001 cc/g or more and 0.10 cc/g or less, and more preferably 0.05 cc/g or more and 0.10 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 2.0 to 2.5 nm among pore volumes calculated by a QSDFT method is preferably 0.1 cc/g or less, more preferably 0.02 cc/g or more and 0.09 cc/g or less, and further preferably 0.06 cc/g or more and 0.09 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 2.5 to 3.0 nm among pore volumes calculated by a QSDFT method is preferably 0.15 cc/g or less, more preferably 0.02 cc/g or more and 0.13 cc/g or less, further preferably 0.10 cc/g or more and 0.13 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 3.5 to 4.0 nm among pore volumes calculated by a QSDFT method is preferably 0.1 cc/g or less, more preferably 0.02 cc/g or more and 0.10 cc/g or less, and further preferably 0.06 cc/g or more and 0.10 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 3.0 to 4.0 nm among pore volumes calculated by a QSDFT method is preferably 0.01 cc/g or more and 0.35 cc/g or less, more preferably 0.07 cc/g or more and 0.30 cc/g or less, and further preferably 0.23 cc/g or more and 0.30 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 4.0 to 4.5 nm among pore volumes calculated by a QSDFT method is preferably 0.1 cc/g or less, and more preferably 0.03 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the pore volume of pores having a pore diameter in a range of 4.0 nm or more among pore volumes calculated by a QSDFT method is preferably 0.05 cc/g or more and 0.13 cc/g or less, and more preferably 0.09 cc/g or more and 0.12 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the total pore volume T calculated by a QSDFT method is 0.4 cc/g or more and 1.2 cc/g or less, more preferably 0.6 cc/g or more and 1.1 cc/g or less, and further preferably 0.85 cc/g or more and 1.1 cc/g or less.

In the activated carbon molded body constituting the filter of the present invention, from the viewpoint of making the activated carbon molded body more excellent in performance in removing a fluorine-containing organic compound even when a superficial velocity (SV) of water to be treated is high, the ratio (A/T) of the pore volume A (cc/g) of pores having a pore diameter of 2.0 nm or less among pore volumes calculated by a QSDFT method to the total pore volume T (cc/g) calculated by a QSDFT method is preferably 0.3 to 0.9, more preferably 0.35 to 0.7, and further preferably 0.35 to 0.45.

In the activated carbon molded body constituting the filter of the present invention, from the viewpoint of making the activated carbon molded body more excellent in performance in removing a fluorine-containing organic compound even when a superficial velocity (SV) of water to be treated is high, the ratio (B/T) of the pore volume B (cc/g) of pores having a pore diameter in a range of 3.0 to 3.5 nm among pore volumes calculated by a QSDFT method to the total pore volume T (cc/g) calculated by a QSDFT method is preferably 0.02 to 0.25, more preferably 0.08 to 0.25, and further preferably 0.17 to 0.25.

In the activated carbon molded body constituting the filter of the present invention, from the viewpoint of making the activated carbon molded body more excellent in performance in removing a fluorine-containing organic compound even when a superficial velocity (SV) of water to be treated is high, the ratio (B/A) of the pore volume B (cc/g) of pores having a pore diameter in a range of 3.0 to 3.5 nm among pore volumes calculated by a QSDFT method to the pore volume A (cc/g) of pores having a pore diameter of 2.0 nm or less among pore volumes calculated by a QSDFT method is preferably 0.02 to 0.6, more preferably 0.1 to 0.6, and further preferably 0.4 to 0.6.

In the activated carbon molded body constituting the filter of the present invention, from the viewpoint of making the activated carbon molded body more excellent in performance in removing a fluorine-containing organic compound even when a superficial velocity (SV) of water to be treated is high, the ratio (B/C) of the pore volume B (cc/g) of pores having a pore diameter in a range of 3.0 to 3.5 nm among pore volumes calculated by a QSDFT method to the pore volume C (cc/g) of pores having a pore diameter of 2.0 nm or more among pore volumes calculated by a QSDFT method is preferably 0.15 to 0.4, more preferably 0.24 to 0.4, and further preferably 0.32 to 0.38.

In the activated carbon molded body constituting the filter of the present invention, from the viewpoint of making the activated carbon molded body more excellent in performance in removing a fluorine-containing organic compound even when a superficial velocity (SV) of water to be treated is high, the mesopore volume ratio is preferably 10 to 70%, more preferably 30 to 70%, and further preferably 50 to 70%. In the present invention, the mesopore volume ratio is a value calculated by the following formula.

(Formula) ⋯ (Mesopore volume ratio (%)) = ((Total pore volume T (cc/g) calculated by QSDFT method) - (Pore volume A (cc/g) of pores having pore diameter of 2.0 nm or less among pore volumes calculated by QSDFT method))/ (Total pore volume T (cc/g) calculated by QSDFT method) × 100

The activated carbon molded body constituting the filter of the present invention preferably has a specific surface area of 700 to 1600 m$^2$/g, more preferably 900 to 1400 m$^2$/g, further preferably 1000 to 1300 m$^2$/g from the viewpoint of easily obtaining the above-described pore distribution. Here, the specific surface area of the activated carbon molded body is a value calculated based on a nitrogen adsorption isotherm at 77.4 K. Specifically, a nitrogen adsorption isotherm is created as follows. A sample of the activated carbon molded body to be measured is cooled to 77.4 K (boiling point of nitrogen), a nitrogen gas is introduced, and an adsorption amount V [cc/g] of the nitrogen gas is measured by a volumetric method. At this time, a pressure P [hPa] of the nitrogen gas to be introduced is gradually increased, a value obtained by dividing the pressure P by a saturated vapor pressure P0 [hPa] of the nitrogen gas is set as a relative pressure P/P0, and the adsorption amount with respect to each relative pressure is plotted to create a nitrogen adsorption isotherm. The adsorption amount of nitrogen gas can be measured using a commercially available automatic gas adsorption amount measuring apparatus (for example, trade name "AUTOSORB6" (manufactured by Quantachrome Instruments) or the like). In the present invention, the specific surface area is determined according to the BET method based on the nitrogen adsorption isotherm. For this analysis, a known means such as an analysis program attached to the above apparatus can be used.

<Component contained in activated carbon molded body>

(Activated carbon)

The activated carbon molded body constituting the filter of the present invention contains at least activated carbon. The form of the activated carbon is not particularly limited, and examples thereof include granular activated carbon, powdered activated carbon, and fibrous activated carbon. These activated carbons may be used singly or in combination of two or more kinds thereof.

The activated carbon is not particularly limited as long as an activated carbon molded body having the above-described physical properties can be obtained. Since the pore diameter and the pore volume, the mesopore volume ratio, and the specific surface area of the activated carbon molded body described above are basically derived from the pore diameter and the pore volume, the mesopore volume ratio, and the specific surface area of the activated carbon as a raw material, an activated carbon molded body having the above-described physical properties can be obtained by appropriately adjusting the pore diameter and the pore volume, the mesopore volume ratio, and the specific surface area of the activated carbon as a raw material. Two or more kinds of activated carbons having different pore diameters and pore volumes thereof may be used in combination to adjust the physical properties of the activated carbon molded body to desired values. The pore diameter and the pore volume, the mesopore volume ratio, and the specific surface area of the activated carbon can be adjusted to desired values by appropriately adjusting activation conditions (activation temperature, activation gas, and the like) when the activated carbon is produced. The pore diameter and the pore volume, the mesopore volume ratio, and the specific surface area of the activated carbon can be measured by the same methods as those described in the section of <Physical properties of activated carbon molded body> described above. Examples of commercially available activated carbon for obtaining an activated carbon molded body having the above-described physical properties include trade name "W-15W" (fibrous activated carbon) manufactured by AD'ALL Co., LTD. and trade name "TC-100N" (granular activated carbon) manufactured by Osaka Gas Chemicals Co., Ltd.

The content ratio of the activated carbon contained in the activated carbon molded body constituting the filter of the present invention is not particularly limited, but is usually about 60 mass% or more, and is preferably 60 to 98 mass% and more preferably 70 to 98 mass% from the viewpoint of easily obtaining an activated carbon molded body having the above-described physical properties and the viewpoint of improving performance in removing a fluorine-containing organic compound.

(Binder fiber)

The activated carbon molded body constituting the filter of the present invention may contain binder fibers. The binder fiber is integrated with activated carbon to entangle the activated carbon into a filter shape. Examples of the binder fibers include heat-sealable fibers and pulp.

The heat-sealable fiber is a fiber that exhibits a fusion property by heating. As the heat-sealable component contained in the heat-sealable fiber, a component having a melting point of 80 to 170°C is preferable, and a component having a melting point of 80 to 140°C is more preferable. Specific examples of the heat-sealable component include polyolefin-based resins such as polyethylene and polypropylene, and polyester-based resins such as copolymerized polyethylene terephthalate copolymerized with a copolymerized component such as isophthalic acid. Examples of the heat-sealable fiber include whole fusion-type fiber composed of only a single heat-sealable component, and a core-sheath type heat-sealable fiber in which a heat-sealable component is disposed in a sheath section and a synthetic resin component having a melting point higher than the melting point of the sheath section by preferably 20°C or more, more preferably 30°C or more is disposed in a core section. Among them, a core-sheath type heat-sealable short fiber is preferable from the viewpoint of further enhancing the strength of the activated carbon molded body. In the core-sheath type heat-sealable short fiber, the core component is not particularly limited, but examples thereof include a synthetic resin having a melting point of 150 to 300°C, more preferably 200 to 300°C, and a melting point higher by 20°C or more than the melting point of the heat-sealable component of the sheath section. Examples of the synthetic resin include polyethylene terephthalate. Examples of the heat-sealable component of the sheath section include copolymerized polyethylene terephthalate copolymerized with isophthalic acid. The heat-sealable fiber may be used singly or in combination of two or more kinds thereof.

The fineness of the heat-sealable fiber is not particularly limited, and is, for example, about 0.5 to 5.0 dtex, preferably 1.0 to 3.0 dtex. In the present invention, the fineness of the heat-sealable fiber is a value (average value of 5 times) obtained by measurement based on "Method A" specified in "8.5.1 Fineness based on corrected weight" in JIS L 1015:2021 (Test methods for man-made staple fibres).

The fiber length of the heat-sealable fiber is not particularly limited, and is, for example, about 10 to 100 mm, preferably 30 to 70 mm. In the present invention, the fiber length of the heat-sealable fiber is a value (average value of 200 fibers) obtained by measurement based on "Direct method (Method C)" specified in "8.4.1 Average fiber length" in JIS L 1015:2021 (Test methods for man-made staple fibres).

The fiber diameter of the heat-sealable fiber is not particularly limited, and is, for example, about 1 to 20 $\mu$m, preferably 5 to 15 $\mu$m. In the present invention, the fiber diameter of the heat-sealable fiber is a value obtained by observing a cross section of the heat-sealable fiber with a microscope and measuring the length thereof.

The pulp contributes to further improving the mechanical strength in the activated carbon molded body. The freeness of the pulp is not particularly limited, but is preferably 1 to 300 ml and more preferably 10 to 200 ml. In the present invention, the freeness of the pulp is a value (average value of results of two times measurements) obtained by measurement based on JIS P 8121-2:2012 (Pulps-Determination of drainability-Part 2: "Canadian Standard" freeness method). The fiber length of the pulp is not particularly limited, but is preferably 0.1 to 3 mm. Examples of the pulp include acrylic pulp, polyolefin pulp, aramid pulp, wood pulp, and hemp pulp.

Since the content of the binder fibers contained in the activated carbon molded body constituting the filter of the present invention affects the pore volume, the mesopore volume ratio, and the specific surface area of the activated carbon molded body, it is necessary to appropriately adjust the pore volume, the mesopore volume ratio, and the specific surface area of the activated carbon molded body to target values. The total content ratio of the binder fibers contained in the activated carbon molded body constituting the filter of the present invention is usually about 40 mass% or less in order to easily adjust the pore volume, the mesopore volume ratio, and the specific surface area of the activated carbon molded body to target values, and is preferably 2 to 35 mass% and more preferably 3 to 30 mass% from the viewpoint of more easily obtaining an activated carbon molded body having the above-described physical properties, the viewpoint of improving the mechanical strength of the activated carbon molded body, and the viewpoint of improving performance in removing a fluorine-containing organic compound. When the activated carbon molded body contains heat-sealable fibers, the content ratio of the heat-sealable fibers is, for example, about 1 to 30 mass%, and is preferably 3 to 30 mass%, more preferably 5 to 25 mass%, and further preferably 10 to 20 mass% from the above viewpoint. When the activated carbon molded body contains pulp, the content ratio of the pulp is, for example, about 1 to 20 mass%, and is preferably 2 to 15 mass% and more preferably 3 to 10 mass% from the above viewpoint.

(Other components)

The activated carbon molded body constituting the filter of the present invention may contain other components as necessary in addition to the activated carbon and the binder fiber. Examples of the other components include a component capable of removing lead. Examples of the component capable of removing lead include ion exchange fibers, ion exchange resins, chelate fibers, chelate resins, titanium silicate, and zeolite. These components may be used singly or in combination of two or more kinds thereof. The content ratio of other components contained in the activated carbon molded body constituting the filter of the present invention is not particularly limited, but is usually about 5 mass% or less, preferably 3 mass% or less, and more preferably 2 mass% or less.

<Method for producing activated carbon molded body>

A method for producing an activated carbon molded body constituting the filter of the present invention is not particularly limited, and a known method can be applied using the activated carbon and, as necessary, the binder fibers and/or other components. Examples of the method for producing an activated carbon molded body constituting the filter of the present invention include a wet method, a dry method, and a slurry suction method.

The method for producing a sheet-shaped activated carbon molded body by a wet method is not particularly limited, and examples thereof include the following methods. First, activated carbon and binder fibers and/or other components blended as necessary are mixed and sheared using a device such as a pulper, a beater, or a refiner to prepare a slurry uniformly dispersed in water. The content of the activated carbon in the slurry is preferably 60 mass% or more, more preferably 60 to 98 mass%, and further preferably 70 to 98 mass% with respect to the entire solid content (components other than water) from the viewpoint of easily obtaining an activated carbon molded body having the above-described physical properties. The obtained slurry is passed over a net (wire) at a predetermined flow rate and dehydrated to adjust the basis weight. Thereafter, the slurry is molded into a sheet (non-woven fabric) shape by a known technique of, for example, drying the sheet in a dryer part through a press part, smoothening the surface of the sheet in a calender part, and then winding up the sheet by a reel, thereby obtaining an activated carbon molded body that is a sheet-shaped molded body. The thickness of the sheet-shaped molded body can be adjusted to a desired thickness by a hot press roller or the like. A cylindrical activated carbon molded body can be obtained, for example, by winding a sheet-shaped molded body produced by a wet method around a cylindrical core a plurality of times so as to have a predetermined thickness, performing heat treatment in that state, cooling, and then removing the core. When a cylindrical activated carbon molded body is produced, fibrous activated carbon is preferably contained, and heat-sealable short fibers are preferably contained as binder fibers.

The method for producing a sheet-shaped activated carbon molded body by a dry method is not particularly limited, and examples thereof include a method in which activated carbon and binder fibers and/or other components blended as necessary are used to mold into a sheet (non-woven fabric) shape of a short fiber structure by an air-laid or card method (card web method) to obtain an activated carbon molded body as a sheet-shaped molded body, and a method in which the sheet-shaped molded body is subjected to needle punching to be molded into a needle punch sheet (needle punch non-woven fabric) shape laminated and integrated to obtain an activated carbon molded body that is a laminated sheet-shaped molded body. A cylindrical activated carbon molded body can be obtained, for example, by winding a sheet-shaped molded body or a laminated sheet-shaped molded body produced by a dry method around a cylindrical core a plurality of times so as to have a predetermined thickness, performing heat treatment in that state, cooling, and then removing the core. When a cylindrical activated carbon molded body is produced, fibrous activated carbon is preferably contained, and heat-sealable short fibers are preferably contained as binder fibers.

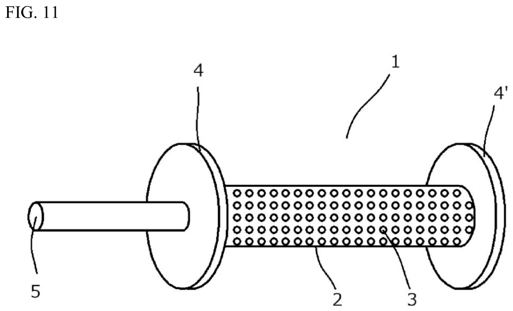

The method for producing an activated carbon molded body by a slurry suction method is not particularly limited, and examples thereof include the following methods. First, activated carbon and binder fibers and/or other components blended as necessary are mixed with water to obtain a slurry. The content of the activated carbon in the slurry is preferably 60 mass% or more, more preferably 60 to 98 mass%, and further preferably 70 to 98 mass% with respect to the entire solid content (components other than water) from the viewpoint of easily obtaining an activated carbon molded body having the above-described physical properties. Next, the molding die frame is immersed in the slurry. Examples of a molding die frame 1 include a molding die frame having a large number of suction small holes 3 on a surface of a cylindrical core body 2, having detachable flanges 4 and 4' at both ends, and having a filtrate discharge port 5 at one end as illustrated in Fig. 11. Then, the slurry is filtered while being sucked from the filtrate discharge port 5 through the suction small holes 3 using a suction pump or the like, whereby the slurry is attached to the surface of the core body 2 to obtain a slurry molded body. The obtained slurry molded body is dried to obtain an activated carbon molded body. Alternatively, a cylindrical non-woven fabric core to be described later may be set in the core body 2, and the slurry may be attached to the surface of the non-woven fabric core by the same method as described above to obtain a slurry molded body in which the non-woven fabric core and an activated carbon layer (layer to be an activated carbon molded body) are integrated. The obtained slurry molded body is dried to obtain a laminated activated carbon molded body in which the non-woven fabric core and the activated carbon molded body are integrated. Examples of an activated carbon molded body and a laminated activated carbon molded body to be obtained include those in which activated carbon is entangled with binder fibers such as pulp to retain the shape. The slurry molded body may be subjected to heat treatment and compression treatment as necessary. In the slurry suction method, since the shape of the activated carbon molded body is a shape corresponding to the shape of the molding die frame or the non-woven fabric core, the shape of the activated carbon molded body can be changed into various shapes by changing the shape of the molding die frame or the non-woven fabric core.

<Form of activated carbon molded body>

The form of the activated carbon molded body constituting the filter of the present invention is not particularly limited, and examples thereof include a sheet shape, a disk shape, a columnar shape, and a cylindrical shape, and a cylindrical shape is preferable.

When the activated carbon molded body is cylindrical, the height of the activated carbon molded body is not particularly limited, and is, for example, 10 to 250 mm, preferably 20 to 100 mm. The outer diameter of the activated carbon molded body is not particularly limited, and is, for example, 10 to 50 mm, preferably 20 to 45 mm. The inner diameter of the activated carbon molded body is not particularly limited, and is, for example, 5 to 30 mm, preferably 10 to 20 mm. The thickness of the activated carbon molded body is not particularly limited, and is, for example, 5 to 45 mm, preferably 10 to 35 mm. The volume of the activated carbon molded body is, for example, 1 to 500 $cm^3$, preferably 10 to 100 $cm^3$, more preferably 10 to 50 $cm^3$.

<Constituent member of filter>

The filter of the present invention includes at least the activated carbon molded body. When the activated carbon molded body is cylindrical, a cylindrical core may be included. The cylindrical core has pores through which water to be treated can pass, serves as a core section member to increase the strength of the filter, and also serves to reduce falling of carbon dust from the activated carbon molded body.

The material of the cylindrical core is not particularly limited, and known materials can be used, and examples thereof include porous ceramics, porous metal filters, and non-woven fabrics. A cylindrical core obtained by molding a member having pores into a cylindrical shape using resin, metal, or the like as a raw material may be used. Among them, a non-woven fabric core is preferable, and a core obtained by compression-molding a non-woven fabric is more preferable. The non-woven fabric core may be integrated with the activated carbon molded body to constitute a part of the laminated activated carbon molded body. The fiber material constituting the non-woven fabric is not particularly limited, but examples thereof include synthetic fibers, and polyester fibers are preferable. The cylindrical core may not contain activated carbon.

Examples of the cylindrical non-woven fabric core include a molded body in which a non-woven fabric containing heat-sealable short fibers is wound, and at least a part of the heat-sealable component of the heat-sealable short fibers is contained in a state of being heat-sealed to other heat-sealable short fibers. With such a configuration of the non-woven fabric core, the heat-sealable short fibers are randomly arranged three-dimensionally, and further, the heat-sealable short fibers are present in the non-woven fabric in a relatively hard state and in a state in which the fiber axis direction is partially oriented in the thickness direction by applying heat treatment to the heat-sealable short fibers, and as a result, a decrease in the flow rate is easily suppressed. As the heat-sealable component in the heat-sealable short fiber, a component having a melting point (a softening point when there is no melting point, the same applies hereinafter) of 80 to 170°C is preferable, and a component having a melting point of 80 to 140°C is more preferable. Specific examples of the heat-sealable component include polyolefin-based resins such as polyethylene and polypropylene, and polyester-based resins such as copolymerized polyethylene terephthalate copolymerized with a copolymerized component such as isophthalic acid. Among them, the heat-sealable component is preferably a polyester-based component, and more preferably a copolymerized polyethylene terephthalate copolymerized with isophthalic acid, from the viewpoint that the hydrophilicity is relatively high, and the water conformability is better, so that the flow rate is further improved. In the present invention, the melting point is defined as a temperature that gives an extreme value of a melting absorption curve measured at a heating rate of 20°C/min using a differential scanning calorimeter (DSC7 manufactured by PerkinElmer, Inc.). Examples of the heat-sealable short fiber include whole fusion-type fiber composed of only a single heat-sealable component, and a core-sheath type heat-sealable short fiber in which a heat-sealable component is disposed in a sheath section and a synthetic resin component having a melting point higher than the melting point of the sheath section by preferably 20°C or more, more preferably 30°C or more is disposed in a core section. Among them, a core-sheath type heat-sealable short fiber is preferable from the viewpoint of further enhancing the strength of the filter. In the core-sheath type heat-sealable short fiber, the core component is not particularly limited, but examples thereof include a synthetic resin component having a melting point of 150 to 300°C, more preferably 200 to 300°C, and a melting point higher by 20°C or more than the melting point of the heat-sealable component of the sheath section. Examples of the synthetic resin component include polyethylene terephthalate. Examples of the heat-sealable component of the sheath section include copolymerized polyethylene terephthalate copolymerized with isophthalic acid. The heat-sealable short fibers may be used singly or in combination of two or more kinds thereof.

The filter of the present invention may include a cover layer laminated on the activated carbon molded body. The cover layer has pores through which water to be treated can pass, and plays a role of reducing falling of carbon dust from the activated carbon molded body. When the activated carbon molded body is cylindrical, a cover layer covering an outer peripheral surface and/or an inner peripheral surface of the cylinder can be provided. The cover layer is not particularly limited, but preferred examples thereof include fabrics such as woven fabrics, knitted fabrics, and non-woven fabrics, and non-woven fabrics are preferable. Among them, a non-woven fabric formed of long fibers or continuous fibers is preferable from the viewpoint of relatively high tear strength and more excellent handleability and processability.

When the activated carbon molded body is cylindrical, the filter of the present invention may include end caps that cover the upper surface and the lower surface of the cylinder. The end cap is not particularly limited, and examples thereof include those that can withstand long-term water passage, such as stainless steel, rubber, and resin. Examples of the bonding of the end cap include a urethane resin adhesive, an epoxy resin adhesive, and an isocyanate-based resin adhesive, which have durability at the time of long-term water passage and have high sealability of the end surface of the filter by the resin alone.

<Physical properties of filter>

Since the filter of the present invention is a filter including an activated carbon molded body containing activated carbon, in which among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter in a range of 3.0 to 3.5 nm, even when a superficial velocity (SV) of water to be treated is high, the filter is excellent in performance in removing a fluorine-containing organic compound.

As the performance in removing a fluorine-containing organic compound included in the filter of the present invention, the filtered water amount (L/cm$^3$) per 1 cm$^3$ of the activated carbon molded body as measured by the following method is preferably 15 L/cm$^3$ or more, more preferably 20 L/cm$^3$ or more, and further preferably 40 L/cm$^3$ or more. The upper limit is not particularly limited, and is, for example, 80 L/cm$^3$ or 60 L/cm$^3$.

<Measurement method>

The filtered water amount is measured by the following method in accordance with NSF/ANSI 53-2021 (DRINKING WATER TREATMENT UNITS-HEALTH EFFECTS, Standard by NSF International, based in Michigan, USA). The filter is loaded into a stainless steel housing. A mixture (pH = 7.5 ± 0.5, temperature: 20 ± 2.5°C, sulfate ion: 200 ± 40 mg/L, chloride ion: 100 ± 20 mg/L, alkalinity: 200 ± 40 mg/L, turbidity: less than 1 NTU) obtained by adding perfluorooctanesulfonic acid (PFOS) and perfluorooctanoic acid (PFOA) to tap water having a total organic matter concentration (TOC) (organic matter concentration converted to carbon (C), measured by a TOC meter) of 0.5 mg/L or less through an activated carbon filter and a hollow fiber membrane so that a concentration of PFOA is 0.0005 ± 0.00005 mg/L and a concentration of PFOS is 0.001 ± 0.00010 mg/L is used as adjusted raw water. The adjusted raw water is continuously passed through the filter loaded in the stainless steel housing at a filtration flow rate of 2 L/min, and the concentrations of PFOS and PFOA before and after passing through the filter are quantitatively measured by solid phase extraction-liquid chromatography-mass spectrometry. A point at which a total concentration in water of PFOS and PFOA in outflow water (water having been passed through the filter) is 0.00007 mg/L or more is defined as a breakthrough point, and a total filtered water amount (L) until the breakthrough point is determined. A value obtained by dividing the obtained total filtered water amount (L) by a volume ($cm^3$) of the activated carbon molded body constituting the filter is taken as a filtered water amount ($L/cm^3$) per 1 $cm^3$ of the activated carbon molded body constituting the filter.

As the performance in removing a fluorine-containing organic compound included in the filter of the present invention, the filtered water amount per 1 g of the activated carbon contained in the activated carbon molded body as measured by the following method is preferably 30 L/g or more, more preferably 100 L/g or more, and further preferably 150 L/g or more. The upper limit is not particularly limited, and is, for example, 300 L/g or 250 L/g.

<Measurement method>

A point at which a total concentration in water of PFOS and PFOA in outflow water is 0.00007 mg/L or more is defined as a breakthrough point, and a total filtered water amount (L) until the breakthrough point is determined in the same manner as the method for measuring the filtered water amount ($L/cm^3$) per 1 $cm^3$ of the activated carbon molded body constituting the filter of the present invention as measured in accordance with NSF/ANSI 53-2021. A value obtained by dividing the obtained total filtered water amount (L) by a total weight of the activated carbon contained in the activated carbon molded body constituting the filter is taken as a filtered water amount (L/g) per 1 g of the activated carbon contained in the activated carbon molded body constituting the filter of the present invention.

As the performance in removing a fluorine-containing organic compound included in the filter of the present invention, the filtered water amount ($L/cm^3$) per 1 $cm^3$ of the activated carbon molded body as measured by the following method is preferably 4 $L/cm^3$ or more, more preferably 6 $L/cm^3$ or more, and further preferably 20 $L/cm^3$ or more. The upper limit is not particularly limited, and is, for example, 60 $L/cm^3$ or 50 $L/cm^3$.

<Measurement method>

The filtered water amount is measured by the following method in accordance with NSF/ANSI 53-2022 (DRINKING WATER TREATMENT UNITS-HEALTH EFFECTS, Standard by NSF International, based in Michigan, USA). The filter is loaded into a stainless steel housing. A mixture (pH = 7.5 ± 0.5, temperature: 20 ± 2.5°C, sulfate ion: 200 ± 40 mg/L, chloride ion: 100 ± 20 mg/L, alkalinity: 200 ± 40 mg/L, turbidity: less than 1 NTU) obtained by adding perfluorooctanesulfonic acid (PFOS) and perfluorooctanoic acid (PFOA) to tap water having a total organic matter concentration (TOC) (organic matter concentration converted to carbon (C), measured by a TOC meter) of 0.5 mg/L or less through an activated carbon filter and a hollow fiber membrane so that a concentration of PFOA is 0.0005 ± 0.00005 mg/L and a concentration of PFOS is 0.001 ± 0.00010 mg/L is used as adjusted raw water. The adjusted raw water is continuously passed through the filter loaded in the stainless steel housing at a filtration flow rate of 2 L/min, and the concentrations of PFOS and PFOA before and after passing through the filter are quantitatively measured by solid phase extraction-liquid chromatography-mass spectrometry. A point at which a total concentration in water of PFOS and PFOA in outflow water (water having been passed through the filter) is 0.00002 mg/L or more is defined as a breakthrough point, and a total filtered water amount (L) until the breakthrough point is determined. A value obtained by dividing the obtained total filtered water amount (L) by a volume ($cm^3$) of the activated carbon molded body constituting the filter is taken as a filtered water amount ($L/cm^3$) per 1 $cm^3$ of the activated carbon molded body constituting the filter.

As the performance in removing a fluorine-containing organic compound included in the filter of the present invention, the filtered water amount per 1 g of the activated carbon contained in the activated carbon molded body as measured by the following method is preferably 10 L/g or more, more preferably 30 L/g or more, and further preferably 100 L/g or more. The upper limit is not particularly limited, and is, for example, 250 L/g or 200 L/g.

<Measurement method>

A point at which a total concentration in water of PFOS and PFOA in outflow water is 0.00002 mg/L or more is defined as a breakthrough point, and a total filtered water amount (L) until the breakthrough point is determined in the same manner as the method for measuring the filtered water amount ($L/cm^3$) per 1 $cm^3$ of the activated carbon molded body constituting the filter of the present invention as measured in accordance with NSF/ANSI 53-2022. A value obtained by dividing the obtained total filtered water amount (L) by a total weight of the activated carbon contained in the activated carbon molded body constituting the filter is taken as a filtered water amount (L/g) per 1 g of the activated carbon contained in the activated carbon molded body constituting the filter of the present invention.

In the measurement method, commercially available products may be used as the activated carbon filter and the hollow fiber membrane. Examples of the TOC meter include trade name TOC-5000 manufactured by SHIMADZU CORPORATION.

<Use and others of filter>

The filter of the present invention is used as a water purification filter for removing various harmful substances, particularly PFAS, contained in water to be treated. Examples of the water to be treated include tap water, factory wastewater, and domestic wastewater, and tap water is preferable. Examples of PFAS include, in addition to PFOA and PFOS, perfluorohexanesulfonic acid (PFHxS), perfluorocarboxylic acid (PFCAs), perfluorohexanoic acid (PFHxA), and perfluorobutanesulfonic acid (PFBS). The filter of the present invention is particularly excellent in performance in removing PFOS and PFOA, and thus is suitably used for removing PFOS and/or PFOA from water to be treated containing PFOS and/or PFOA.

The filter of the present invention is excellent in performance in removing PFAS even under conditions where the superficial velocity (SV) of the water to be treated is high, for example, the SV is 2500 $h^{-1}$ or more, 3000 $h^{-1}$ or more, or 3500 $h^{-1}$ or more.

A method for removing a fluorine-containing organic compound of the present invention is characterized by including a step of removing a fluorine-containing organic compound in water to be treated containing a fluorine-containing organic compound by passing the water to be treated through a filter including an activated carbon molded body containing activated carbon, in which among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter of 3.0 to 3.5 nm. The water to be treated is preferably tap water. The fluorine-containing organic compound preferably contains perfluorooctanesulfonic acid and/or perfluorooctanoic acid.

The present invention is use of a filter for removing a fluorine-containing organic compound in water to be treated, the filter including an activated carbon molded body containing activated carbon, characterized in that among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter in a range of 3.0 to 3.5 nm.

The present invention is use of an activated carbon molded body for producing a fluorine-containing organic compound removing filter, the activated carbon molded body containing activated carbon, characterized in that among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter in a range of 3.0 to 3.5 nm.

In the method for removing a fluorine-containing organic compound of the present invention and the use of the filter of the present invention, the superficial velocity of the water to be treated (the flow rate with respect to the volume of the activated carbon molded body) can be set to 2500 $h^{-1}$ or more.

Examples

Hereinafter, the present invention will be specifically described with reference to Examples and Comparative Examples. However, the present invention is not limited to Examples.

<Example 1>

1. Preparation of raw material of activated carbon molded body

In producing the activated carbon molded body, the following raw materials were prepared.

· Fibrous activated carbon A (trade name "W-15W" manufactured by AD'ALL Co., LTD.)
· Fibrous activated carbon B (trade name "A-15" manufactured by AD'ALL Co., LTD.)
· Heat-sealable short fiber (heat-sealable short fiber in which polyethylene terephthalate copolymerized with isophthalic acid as a heat-sealable component is disposed in a sheath section and polyethylene terephthalate is disposed in a core section, the melting point of the sheath section is 110°C, the melting point of the core section is 260°C, the fiber length is 51 mm, the fiber diameter is 12 μm, and the fineness is 2.2 dtex)

· Pulp (trade name BiPUL (registered trademark) manufactured by Japan Exlan Co., Ltd., fibrillated acrylic fiber, freeness: 50 ml)

2. Production of non-woven fabric serving as activated carbon molded body

The prepared raw materials were mixed using a pulper so that the mass ratio of the raw materials in the activated carbon molded body was as shown in Table 1 to prepare a uniformly dispersed slurry. The obtained slurry was passed over a wire at a predetermined flow rate and dehydrated to adjust the basis weight. Thereafter, the sheet was dried in a dryer part through a press part, the surface of the sheet was smoothed in a calender part, and then the sheet was wound up by a reel. Thereafter, the sheet was hot-pressed at 110°C with a hot press roller to obtain a wet non-woven fabric containing activated carbon.

3. Production of activated carbon molded body

An iron cylindrical pipe having an outer diameter of 10 mm was prepared as a core, and the produced wet non-woven fabric containing activated carbon was wound around the core a plurality of times so as to have a predetermined thickness. Then, the wet non-woven fabric was placed in a furnace in a state of being wound, heat-treated at an atmospheric temperature of 150°C for 2 hours, and then naturally cooled. Thereafter, the core was removed, and then the wound wet non-woven fabric was cut into a length of 60 mm with a cutting machine to obtain an activated carbon molded body. The obtained activated carbon molded body had a height (length) of 60 mm, an outer diameter of 30 mm, an inner diameter of 10 mm, a mass of 10.3 g, and a mass of activated carbon contained in the activated carbon molded body of 7.5 g.

<Example 2>

1. Preparation of raw material of activated carbon molded body

In producing the activated carbon molded body, the following raw materials were prepared.

· Fibrous activated carbon A (trade name "W-15W" manufactured by AD'ALL Co., LTD.)
· Pulp (trade name BiPUL (registered trademark) manufactured by Japan Exlan Co., Ltd., fibrillated acrylic fiber, freeness: 50 ml)

2. Production of non-woven fabric core

Heat-sealable short fibers (heat-sealable short fibers in which polyethylene terephthalate copolymerized with isophthalic acid as a heat-sealable component is disposed in a sheath section and polyethylene terephthalate is disposed in a core section, the melting point of the sheath section is 110°C, the melting point of the core section is 260°C, the fiber length is 51 mm, the fiber diameter is 12 $\mu$m, and the fineness is 2.2 dtex) were carded to form a thin web, and the web was subjected to needle punching, heat-pressed at a temperature of 170°C, and cooled to obtain a non-woven fabric. Next, an iron cylindrical pipe having an outer diameter of 10 mm was prepared as a core, and the non-woven fabric was wound around the core a plurality of times so as to have a predetermined thickness so that the outer diameter of the non-woven fabric core was 12 mm, placed in a furnace, heat-treated at an atmospheric temperature of 150°C for 1 hour, and then naturally cooled. Thereafter, the core was removed, and then the wound non-woven fabric was cut into a length of 56 mm with a cutting machine to obtain a non-woven fabric core. The obtained non-woven fabric core has an inner diameter of 10 mm, an outer diameter of 12 mm, and an apparent density of 0.35 g/cm$^3$.

3. Production of laminated activated carbon molded body

The prepared raw materials were dispersed in water such that the mass ratio of each raw material in the activated carbon molded body was as shown in Table 1, thereby obtaining a slurry. The prepared non-woven fabric core was set on the core body 2 of the molding die frame 1 illustrated in Fig. 11, and the molding die frame was immersed in the slurry. Then, the slurry was filtered while being sucked from the filtrate discharge port 5 through the suction small holes 3 using a suction pump, whereby the slurry was attached to the surface of the non-woven fabric core to obtain a slurry molded body in which the non-woven fabric core and the activated carbon layer (layer serving as the activated carbon molded body) are integrated. The obtained slurry molded body was pulled out from the molding die frame, and the slurry molded body was dried in a drying furnace at 120°C for 15 hours to obtain a cylindrical laminated activated carbon molded body (laminate of the non-woven fabric core and the activated carbon molded body) having an outer diameter of 30 mm, an inner diameter of 12 mm, and a length of 56 mm. The mass of the obtained activated carbon molded body was 9.9 g, and the mass of the activated carbon contained in the activated carbon molded body was 9.4 g.

<Example 3>

1. Preparation of raw material of activated carbon molded body

In producing the activated carbon molded body, the following raw materials were prepared.

· Granular activated carbon C (trade name "TC-100N" manufactured by Osaka Gas Chemicals Co., Ltd.)
· Pulp (trade name BiPUL (registered trademark) manufactured by Japan Exlan Co., Ltd., fibrillated acrylic fiber, freeness: 50 ml)

2. Production of non-woven fabric core

Heat-sealable short fibers (heat-sealable short fibers in which polyethylene terephthalate copolymerized with isophthalic acid as a heat-sealable component is disposed in a sheath section and polyethylene terephthalate is disposed in a core section, the melting point of the sheath section is 110°C, the melting point of the core section is 260°C, the fiber length is 51 mm, the fiber diameter is 12 $\mu$m, and the fineness is 2.2 dtex) were carded to form a thin web, and the web was subjected to needle punching, heat-pressed at a temperature of 170°C, and cooled to obtain a non-woven fabric. Next, an iron cylindrical pipe having an outer diameter of 10 mm was prepared as a core, and the non-woven fabric was wound around the core a plurality of times so as to have a predetermined thickness so that the outer diameter of the non-woven fabric core was 12 mm, placed in a furnace, heat-treated at an atmospheric temperature of 150°C for 1 hour, and then naturally cooled. Thereafter, the core was removed, and then the wound non-woven fabric was cut into a length of 30 mm with a cutting machine to obtain a non-woven fabric core. The obtained non-woven fabric core has an inner diameter of 10 mm, an outer diameter of 12 mm, and an apparent density of 0.35 g/cm³.

3. Production of laminated activated carbon molded body

The prepared raw materials were dispersed in water such that the mass ratio of each raw material in the activated carbon molded body was as shown in Table 1, thereby obtaining a slurry. The prepared non-woven fabric core was set on the core body 2 of the molding die frame 1 illustrated in Fig. 11, and the molding die frame was immersed in the slurry. Then, the slurry was filtered while being sucked from the filtrate discharge port 5 through the suction small holes 3 using a suction pump, whereby the slurry was attached to the surface of the non-woven fabric core to obtain a slurry molded body in which the non-woven fabric core and the activated carbon layer (layer serving as the activated carbon molded body) are integrated. The obtained slurry molded body was pulled out from the molding die frame, and the slurry molded body was dried in a drying furnace at 120°C for 15 hours to obtain a cylindrical laminated activated carbon molded body (laminate of the non-woven fabric core and the activated carbon molded body) having an outer diameter of 40 mm, an inner diameter of 12 mm, and a length of 30 mm. The mass of the obtained activated carbon molded body was 15.0 g, and the mass of the activated carbon contained in the activated carbon molded body was 13.8 g.

<Comparative Example 1>

1. Preparation of raw material of activated carbon molded body

In producing the activated carbon molded body, the following raw materials were prepared.

· Fibrous activated carbon D (trade name "A-7" manufactured by AD'ALL Co., LTD.)
· Granular activated carbon E (trade name "FM-150" manufactured by CATALER CORPORATION)
· Heat-sealable short fiber (heat-sealable short fiber in which polyethylene terephthalate copolymerized with isophthalic acid as a heat-sealable component is disposed in a sheath section and polyethylene terephthalate is disposed in a core section, the melting point of the sheath section is 110°C, the melting point of the core section is 260°C, the fiber length is 51 mm, the fiber diameter is 12 $\mu$m, and the fineness is 2.2 dtex)
· Pulp (trade name BiPUL (registered trademark) manufactured by Japan Exlan Co., Ltd., fibrillated acrylic fiber, freeness: 50 ml)

2. Production of non-woven fabric serving as activated carbon molded body

The prepared raw materials were mixed using a pulper so that the mass ratio of the raw materials in the activated carbon molded body was as shown in Table 1 to prepare a uniformly dispersed slurry. The obtained slurry was passed over a wire at a predetermined flow rate and dehydrated to adjust the basis weight. Thereafter, the sheet was dried in a dryer part through a press part, the surface of the sheet was smoothed in a calender part, and then the sheet was wound up by a reel. Thereafter, the sheet was hot-pressed at 110°C with a hot press roller to obtain a wet non-woven fabric containing activated carbon.

3. Production of activated carbon molded body

An iron cylindrical pipe having an outer diameter of 10 mm was prepared as a core, and the produced wet non-woven fabric containing activated carbon was wound around the core a plurality of times so as to have a predetermined thickness. Then, the wet non-woven fabric was placed in a furnace in a state of being wound, heat-treated at an atmospheric temperature of 150°C for 2 hours, and then naturally cooled. Thereafter, the core was removed, and then the wound wet non-woven fabric was cut into a length of 60 mm with a cutting machine to obtain an activated carbon molded body. The obtained activated carbon molded body had a height (length) of 60 mm, an outer diameter of 30 mm, an inner diameter of 10 mm, a mass of 13.8 g, and a mass of activated carbon contained in the activated carbon molded body of 10.5 g.

<Comparative Example 2>

1. Preparation of raw material of activated carbon molded body

In producing the activated carbon molded body, the following raw materials were prepared.

· Fibrous activated carbon B (trade name "A-15" manufactured by AD'ALL Co., LTD.)
· Heat-sealable short fiber (heat-sealable short fiber in which polyethylene terephthalate copolymerized with isophthalic acid as a heat-sealable component is disposed in a sheath section and polyethylene terephthalate is disposed in a core section, the melting point of the sheath section is 110°C, the melting point of the core section is 260°C, the fiber length is 51 mm, the fiber diameter is 12 $\mu$m, and the fineness is 2.2 dtex)

2. Production of non-woven fabric serving as activated carbon molded body

Each of the prepared raw materials was carded to form a thin web, and the web was subjected to needle punching, heat-treated at a temperature of 163°C, and cooled to obtain a needle punch non-woven fabric.

3. Production of activated carbon molded body

An iron cylindrical pipe having an outer diameter of 10 mm was prepared as a core, and the produced needle punch non-woven fabric containing activated carbon was wound around the core a plurality of times so as to have a predetermined thickness. Then, the needle punch non-woven fabric was placed in a furnace in a state of being wound, heat-treated at an atmospheric temperature of 150°C for 2 hours, and then naturally cooled. Thereafter, the core was removed, and then the wound needle punch non-woven fabric was cut into a length of 60 mm with a cutting machine to obtain an activated carbon molded body. The obtained activated carbon molded body had a height (length) of 60 mm, an outer diameter of 33 mm, an inner diameter of 10 mm, a mass of 9.6 g, and a mass of activated carbon contained in the activated carbon molded body of 7.9 g.

<Measurement of physical properties>

1. Pore volume and specific surface area of activated carbon molded body

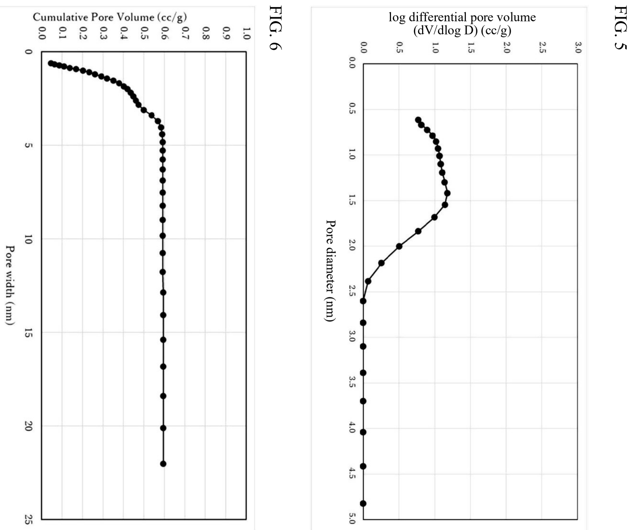

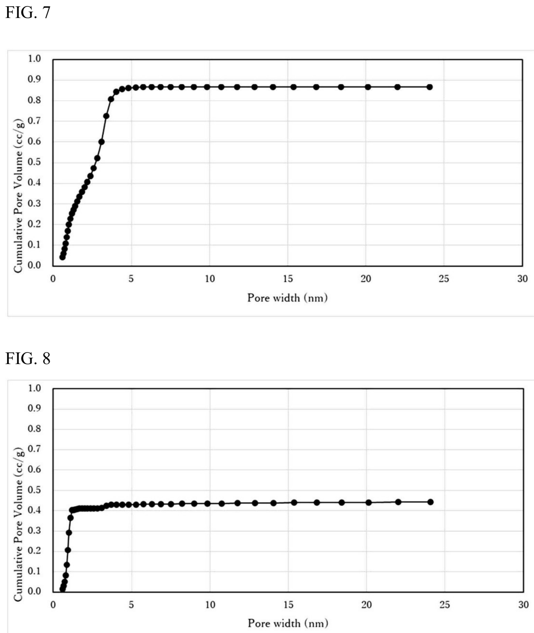

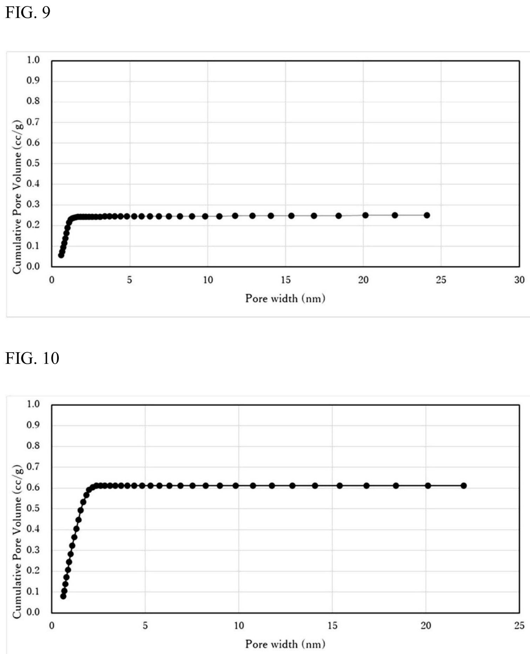

A measurement sample was taken so as to have a mass of 0.1 g at the center in the length direction of the obtained activated carbon molded body. The nitrogen adsorption isotherm at 77 K was measured using the collected measurement sample and "AUTOSORB-6" manufactured by Quantachrome Instruments. The specific surface area was calculated from the measurement point of the relative pressure of 0.1 by the BET method. The total pore volume and the pore volume in each pore diameter range described in Table 1 were analyzed by calculating a pore volume distribution by applying $N_2$ at 77 K on carbon [slit pore, QSDFT equilibrium model] as a calculation model to the measured nitrogen desorption isotherm. Specifically, the pore volume in each pore diameter range described in Table 1 is a read value of the graph showing the integrated pore volume distribution shown in Figs. 6 to 10 or a value calculated from the read value. More specifically, the pore volume of pores having a pore diameter of 0.65 nm or less is a read value of Cumulative Pore Volume (cc/g) when the horizontal axis Pore Width of the integrated pore volume distribution diagram is 0.65 nm. Similarly, the pore volume of pores having a pore diameter of 0.8 nm or less, the pore volume of pores having a pore diameter of 1.0 nm or less, the pore volume of pores having a pore diameter of 1.3 nm or less, the pore volume of pores having a pore diameter of 1.5 nm or less, the pore volume of pores having a pore diameter of 2.0 nm or less, the pore volume of pores having a pore diameter of 2.5 nm or less, the pore volume of pores having a pore diameter of 3.0 nm or less, the pore volume of pores having a pore diameter of 3.5 nm or less, the pore volume of pores having a pore diameter of 4.0 nm or less, the pore volume of pores having a pore diameter of 5.0 nm or less, and the pore volume of pores having a pore diameter of 5.5 nm or less were obtained. The pore volume of pores having a pore diameter of 2.0 nm or more was calculated by subtracting the pore volume of pores having a pore diameter of 2.0 nm or less from the total pore volume obtained by the QSDFT method. The pore volume of pores having a pore diameter in a range of 2.0 nm or more and 2.5 nm or less was calculated by subtracting the pore volume of pores having a pore diameter of 2.0 nm or less from the pore volume of pores having a pore diameter of 2.5 nm or less. The pore volume of pores having a pore diameter in a range of 2.5 nm or more and 3.0 nm or less was calculated by subtracting the pore volume of pores having a pore diameter of 2.5 nm or less from the pore volume of pores having a pore diameter of 3.0 nm or less. The pore volume of pores having a pore diameter in a range of 3.0 nm or more and 3.5 nm or less was calculated by subtracting the pore volume of pores having a pore diameter of 3.0 nm or less from the pore volume of pores having a pore diameter of 3.5 nm or less. The pore volume of pores having a pore diameter in a range of 3.5 nm or more and 4.0 nm or less was calculated by subtracting the pore volume of pores having a pore diameter of 3.5 nm or less from the pore volume of pores having a pore diameter of 4.0 nm or less. The pore volume of pores having a pore diameter in a range of 4.0 nm or more and 4.5 nm or less was calculated by subtracting the pore volume of pores having a pore diameter of 4.0 nm or less from the pore volume of pores having a pore diameter of 4.5 nm or less. The pore volume of pores having a pore diameter in a range of 4.0 nm or more was calculated by subtracting the pore volume of pores having a pore diameter of 4.0 nm or less from the total pore volume obtained by the QSDFT method. The pore volume of pores having a pore diameter in a range of 0.65 nm or more and 0.8 nm or less was calculated by subtracting the pore volume of pores having a pore diameter of 0.65 nm or less from the pore volume of pores having a pore diameter of 0.8 nm or less. The pore volume of pores having a pore diameter in a range of 0.8 nm or more and 1.0 nm or less was calculated by subtracting the pore volume of pores having a pore diameter of 0.8 nm or less from the pore volume of pores having a pore diameter of 1.0 nm or less. The pore volume of pores having a pore diameter in a range of 1.0 nm or more and 1.5 nm or less was calculated by subtracting the pore volume of pores having a pore diameter of 1.0 nm or less from the pore volume of pores having a pore diameter of 1.5 nm or less. The pore volume of pores having a pore diameter in a range of 1.3 nm or more and 1.5 nm or less was calculated by subtracting the pore volume of pores having a pore diameter of 1.3 nm or less from the pore volume of pores having a pore diameter of 1.5 nm or less. The pore volume of pores having a pore diameter in a range of 1.5 nm or more and 2.0 nm or less was calculated by subtracting the pore volume of pores having a pore diameter of 1.5 nm or less from the pore volume of pores having a pore diameter of 2.0 nm or less.

2. Performance in removing a fluorine-containing organic compound included in filter (1) Measurement in accordance with NSF/ANSI 53-2021 (DRINKING WATER TREATMENT UNITS-HEALTH EFFECTS, Standard by NSF International, based in Michigan, USA)

First, the filter was loaded into a stainless steel housing. Next, a mixture (pH = 7.5 ± 0.5, temperature: 20 ± 2.5°C, sulfate ion: 200 ± 40 mg/L, chloride ion: 100 ± 20 mg/L, alkalinity: 200 ± 40 mg/L, turbidity: less than 1 NTU) obtained by adding perfluorooctanesulfonic acid (PFOS) and perfluorooctanoic acid (PFOA) to tap water having a total organic matter concentration (TOC) (organic matter concentration converted to carbon (C), measured by a TOC meter (TOC-5000 manufactured by SHIMADZU CORPORATION)) of 0.5 mg/L or less through a commercially available activated carbon filter and a commercially available hollow fiber membrane so that a concentration of PFOA is 0.0005 ± 0.00005 mg/L and a concentration of PFOS was 0.001 ± 0.00010 mg/L was used as adjusted raw water. The adjusted raw water was continuously passed through the filter loaded in the stainless steel housing at a filtration flow rate of 2 L/min. The concentrations of PFOS and PFOA before and after passing through the filter were quantitatively measured by solid phase extraction-liquid chromatography-mass spectrometry (measurement was performed based on the Ministry of Health, Labour and Welfare "Method for inspecting water quality management target setting item (Vol. 1010001 issued on October 10, 2003), Target 31 perfluorooctanesulfonic acid (PFOS) and perfluorooctanoic acid (PFOA)"). A point at which a total concentration in water of PFOS and PFOA in outflow water (water having been passed through the filter) is 0.00007 mg/L or more was defined as a breakthrough point, and a total filtered water amount (L) until the breakthrough point was determined. A value obtained by dividing the obtained total filtered water amount (L) by a volume (cm$^3$) of the activated carbon molded body constituting the filter was taken as a filtered water amount (L/cm$^3$) per 1 cm$^3$ of the activated carbon molded body constituting the filter. A value obtained by dividing the obtained total filtered water amount (L) by a total weight of the activated carbon contained in the activated carbon molded body constituting the filter was taken as a filtered water amount (L/g) per 1 g of the activated carbon contained in the activated carbon molded body constituting the filter. In the measurement of the performance in removing a fluorine-containing organic compound, the superficial velocity was 3183 $h^{-1}$ in Example 1, 3609 $h^{-1}$ in Example 2, 3498 $h^{-1}$ in Example 3, 3183 $h^{-1}$ in Comparative Example 1, and 2574 $h^{-1}$ in Comparative Example 2.

(2) Measurement in accordance with NSF/ANSI 53-2022 (DRINKING WATER TREATMENT UNITS-HEALTH EFFECTS, Standard by NSF International, based in Michigan, USA)

First, the filter was loaded into a stainless steel housing. Next, a mixture (pH = 7.5 ± 0.5, temperature: 20 ± 2.5°C, sulfate ion: 200 ± 40 mg/L, chloride ion: 100 ± 20 mg/L, alkalinity: 200 ± 40 mg/L, turbidity: less than 1 NTU) obtained by adding perfluorooctanesulfonic acid (PFOS) and perfluorooctanoic acid (PFOA) to tap water having a total organic matter concentration (TOC) (organic matter concentration converted to carbon (C), measured by a TOC meter (TOC-5000 manufactured by SHIMADZU CORPORATION)) of 0.5 mg/L or less through a commercially available activated carbon filter and a commercially available hollow fiber membrane so that a concentration of PFOA is 0.0005 ± 0.00005 mg/L and a concentration of PFOS was 0.001 ± 0.00010 mg/L was used as adjusted raw water. The adjusted raw water was continuously passed through the filter loaded in the stainless steel housing at a filtration flow rate of 2 L/min. The concentrations of PFOS and PFOA before and after passing through the filter were quantitatively measured by solid phase extraction-liquid chromatography-mass spectrometry (measurement was performed based on the Ministry of Health, Labour and Welfare "Method for inspecting water quality management target setting item (Vol. 1010001 issued on October 10, 2003), Target 31 perfluorooctanesulfonic acid (PFOS) and perfluorooctanoic acid (PFOA)"). A point at which a total concentration in water of PFOS and PFOA in outflow water (water having been passed through the filter) is 0.00002 mg/L or more was defined as a breakthrough point, and a total filtered water amount (L) until the breakthrough point was determined. A value obtained by dividing the obtained total filtered water amount (L) by a volume ($cm^3$) of the activated carbon molded body constituting the filter was taken as a filtered water amount (L/$cm^3$) per 1 $cm^3$ of the activated carbon molded body constituting the filter. A value obtained by dividing the obtained total filtered water amount (L) by a total weight of the activated carbon contained in the activated carbon molded body constituting the filter was taken as a filtered water amount (L/g) per 1 g of the activated carbon contained in the activated carbon molded body constituting the filter.

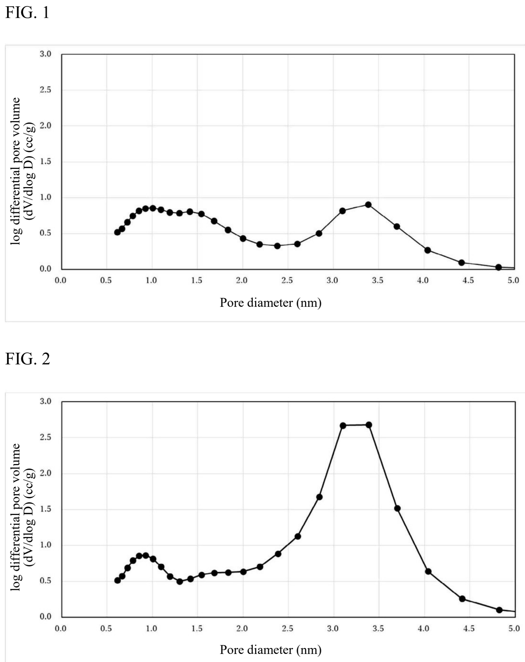

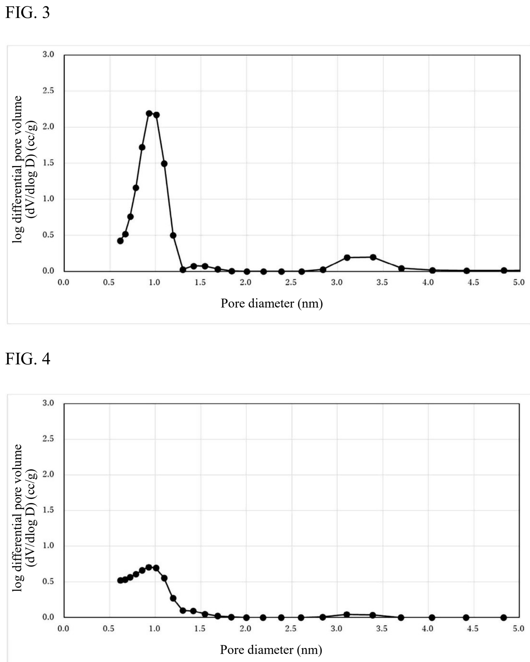

The physical properties and the like of the obtained filter are shown in Table 1. Figs. 1 to 5 show log differential pore volume distribution views calculated by a QSDFT method of the activated carbon molded bodies constituting the filters of Examples 1 to 3 and Comparative Examples 1 and 2. The log differential pore volume distribution (dV/dlogD) is obtained by dividing a differential pore volume dV by a logarithmic differential value dlogD of the pore diameter and plotting the obtained value against the pore diameter. Figs. 6 to 10 are integrated pore volume distribution views calculated by a QSDFT method of the activated carbon molded bodies constituting the filters of Examples 1 to 3 and Comparative Examples 1 and 2.

[Table 1]

| | | | Example 1 | Example 2 | Example 3 | Comparative Example 1 | Comparative Example 2 |
|---|---|---|---|---|---|---|---|
| Molding method for activated carbon molded body | | | Non-woven fabric winding | Wet molding | Wet molding | Non-woven fabric winding | Non-woven fabric winding |
| Composition (parts by mass) of activated carbon molded body | Activated carbon | Fibrous activated carbon D | 0 | 0 | 0 | 7 | 0 |
| | | Fibrous activated carbon B | 43 | 0 | 0 | 0 | 82 |
| | | Fibrous activated carbon A | 30 | 95 | 0 | 0 | 0 |
| | | Granular activated carbon C | 0 | 0 | 92 | 0 | 0 |

| | | | Example 1 | Example 2 | Example 3 | Comparative Example 1 | Comparative Example 2 |
|---|---|---|---|---|---|---|---|
| | | Granular activated carbon E | 0 | 0 | 0 | 69 | 0 |
| | Components other than activated carbon | Heat-sealable fiber | 19 | 0 | 0 | 11 | 18 |
| | | Pulp | 8 | 5 | 8 | 13 | 0 |
| | Total | | 100 | 100 | 100 | 100 | 100 |
| Physical properties | Size (mm) of activated carbon molded body outer diameter/inner diameter*length | | 30/10*60 | 30/12*56 | 40/12*30 | 30/10*60 | 33/10*60 |
| | Volume (cm$^3$) of activated carbon molded body | | 38 | 33 | 34 | 38 | 47 |
| | Mass (g) of activated carbon molded body | | 10.3 | 9.9 | 15.0 | 13.8 | 9.6 |
| | Mass (g) of activated carbon contained in activated carbon molded body | | 7.5 | 9.4 | 13.8 | 10.5 | 7.9 |
| | Specific surface area (m$^2$/g) of activated carbon molded body | | 1094 | 1177 | 1062 | 620 | 1405 |
| | Total pore volume T (cc/g) of activated carbon molded body | | 0.65 | 0.94 | 0.49 | 0.28 | 0.67 |
| | Pore volume (cc/g) of pores having pore diameter of 0.65 nm or less | | 0.059 | 0.054 | 0.024 | 0.070 | 0.098 |
| | Pore volume (cc/g) of pores having pore diameter of 0.8 nm or less | | 0.119 | 0.115 | 0.094 | 0.121 | 0.179 |
| | Pore volume (cc/g) of pores having pore diameter of 1.0 nm or less | | 0.200 | 0.199 | 0.285 | 0.187 | 0.279 |
| | Pore volume (cc/g) of pores having pore diameter of 1.3 nm or less | | 0.293 | 0.272 | 0.403 | 0.234 | 0.404 |
| | Pore volume (cc/g) of pores having pore diameter of 1.5 nm or less | | 0.343 | 0.305 | 0.407 | 0.240 | 0.477 |
| | Pore volume A (cc/g) of pores having pore diameter of 2.0 nm or less | | 0.422 | 0.382 | 0.411 | 0.243 | 0.591 |
| | Pore volume (cc/g) of pores having pore diameter of 2.5 nm or less | | 0.456 | 0.456 | 0.411 | 0.243 | 0.611 |

(continued)

| | | Example 1 | Example 2 | Example 3 | Comparative Example 1 | Comparative Example 2 |
|---|---|---|---|---|---|---|
| | Pore volume (cc/g) of pores having pore diameter of 3.0 nm or less | 0.491 | 0.571 | 0.412 | 0.243 | 0.611 |
| | Pore volume (cc/g) of pores having pore diameter of 3.5 nm or less | 0.550 | 0.756 | 0.427 | 0.246 | 0.611 |
| | Pore volume (cc/g) of pores having pore diameter of 4.0 nm or less | 0.583 | 0.838 | 0.429 | 0.246 | 0.611 |
| | Pore volume (cc/g) of pores having pore diameter of 4.5 nm or less | 0.591 | 0.838 | 0.430 | 0.246 | 0.611 |
| | Pore volume (cc/g) of pores having pore diameter of 5.0 nm or less | 0.593 | 0.858 | 0.430 | 0.246 | 0.611 |
| | Pore volume (cc/g) of pores having pore diameter of 5.5 nm or less | 0.593 | 0.863 | 0.431 | 0.246 | 0.611 |
| | Pore volume C (cc/g) of pores having pore diameter of 2.0 nm or more | 0.228 | 0.558 | 0.079 | 0.037 | 0.079 |
| | Pore volume (cc/g) of pores having pore diameter in range of 2.0 to 2.5 nm | 0.034 | 0.074 | 0.000 | 0.000 | 0.020 |
| | Pore volume (cc/g) of pores having pore diameter in range of 2.5 to 3.0 nm | 0.035 | 0.115 | 0.001 | 0.000 | 0.000 |
| | Pore volume B (cc/g) of pores having pore diameter in range of 3.0 to 3.5 nm | 0.059 | 0.185 | 0.015 | 0.003 | 0.000 |
| | Pore volume (cc/g) of pores having pore diameter in range of 3.5 to 4.0 nm | 0.033 | 0.082 | 0.002 | 0.000 | 0.000 |
| | Pore volume (cc/g) of pores having pore diameter in range of 3.0 to 4.0 nm | 0.092 | 0.267 | 0.017 | 0.003 | 0.000 |
| | Pore volume (cc/g) of pores having pore diameter in range of 4.0 to 4.5 nm | 0.008 | 0.000 | 0.001 | 0.000 | 0.000 |
| | Pore volume (cc/g) of pores having pore diameter of 4.0 nm or more | 0.067 | 0.102 | 0.061 | 0.034 | 0.059 |
| | Pore volume (cc/g) of pores having pore diameter in range of 0.65 to 0.8 nm | 0.060 | 0.061 | 0.070 | 0.051 | 0.081 |
| | Pore volume (cc/g) of pores having pore diameter in range of 0.8 to 1.0 nm | 0.081 | 0.084 | 0.191 | 0.066 | 0.100 |

(continued)

| | | Example 1 | Example 2 | Example 3 | Comparative Example 1 | Comparative Example 2 |
|---|---|---|---|---|---|---|
| | Pore volume (cc/g) of pores having pore diameter in range of 1.0 to 1.5 nm | 0.143 | 0.106 | 0.122 | 0.053 | 0.198 |
| | Pore volume (cc/g) of pores having pore diameter in range of 1.3 to 1.5 nm | 0.050 | 0.033 | 0.004 | 0.006 | 0.073 |
| | Pore volume (cc/g) of pores having pore diameter in range of 1.5 to 2.0 nm | 0.079 | 0.077 | 0.004 | 0.003 | 0.114 |
| | Ratio (A/T) of A to total pore volume T (cc/g) | 0.649 | 0.406 | 0.839 | 0.868 | 0.882 |
| | Ratio (B/T) of B to total pore volume T (cc/g) | 0.091 | 0.197 | 0.031 | 0.011 | 0.000 |
| | Ratio (B/A) of B to A | 0.140 | 0.484 | 0.036 | 0.012 | 0.000 |
| | Ratio (B/C) of B to C | 0.259 | 0.332 | 0.190 | 0.081 | 0.000 |
| | Mesopore volume ratio (%) | 35.1 | 59.4 | 16.1 | 13.2 | 11.8 |
| Performance in removing a fluorine-containing organic compound (measurement in accordance with NSF/ANSI 53-2021) | Total filtered water amount (L) | 840 | 1740 | 560 | 120 | 140 |
| | Filtered water amount (L/g-activated carbon) per 1 g of activated carbon | 112 | 185 | 41 | 11 | 18 |
| | Filtered water amount (L/cm$^3$) per 1 cm$^3$ of activated carbon molded body | 22 | 53 | 16 | 3 | 3 |
| Performance in removing a fluorine-containing organic compound (measurement in accordance with NSF/ANSI 53-2022) | Total filtered water amount (L) | 280 | 1460 | 180 | <30 | 40 |
| | Filtered water amount (L/g-acti- | 37 | 155 | 13 | <3 | 5 |

(continued)

| | | | Example 1 | Example 2 | Example 3 | Comparative Example 1 | Comparative Example 2 |
|---|---|---|---|---|---|---|---|
| | | vated carbon) per 1 g of activated carbon | | | | | |
| | | Filtered water amount (L/cm$^3$) per 1 cm$^3$ of activated carbon molded body | 7 | 44 | 5 | <1 | 1 |

As is clear from Table 1, since the filter of each of Examples 1 to 3 was a filter including an activated carbon molded body containing activated carbon, in which among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter of 3.0 to 3.5 nm, even when a superficial velocity (SV) of water to be treated was high, the filter was excellent in performance in removing a fluorine-containing organic compound.

On the other hand, in Comparative Example 1, since among pore volumes calculated by a QSDFT method, the activated carbon molded body had a pore volume A (cc/g) of less than 0.3 cc/g of pores having a pore diameter of 2.0 nm or less, and a pore volume B (cc/g) of less than 0.01 cc/g of pores having a pore diameter in a range of 3.0 to 3.5 nm, when the superficial velocity (SV) of water to be treated was high, performance in removing a fluorine-containing organic compound was poor.

In Comparative Example 2, since among pore volumes calculated by a QSDFT method, the activated carbon molded body had a pore volume B (cc/g) of less than 0.01 cc/g of pores having a pore diameter in a range of 3.0 to 3.5 nm, when the superficial velocity (SV) of water to be treated was high, performance in removing a fluorine-containing organic compound was poor.

Reference Signs List

1 Molding die frame
2 Core body
3 Suction small hole
4, 4' Flange
5 Filtrate discharge port

**Claims**

1. A filter comprising an activated carbon molded body containing activated carbon,
   wherein among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter in a range of 3.0 to 3.5 nm.

2. The filter according to claim 1, wherein a filtered water amount per 1 cm$^3$ of the activated carbon molded body as measured by the following method is 15 L/cm$^3$ or more:
   <Measurement method>

The filtered water amount is measured by the following method in accordance with NSF/ANSI 53-2021 (DRINKING WATER TREATMENT UNITS-HEALTH EFFECTS, Standard by NSF International, based in Michigan, USA). The filter is loaded into a stainless steel housing. A mixture (pH = 7.5 $\pm$ 0.5, temperature: 20 $\pm$ 2.5°C, sulfate ion: 200 $\pm$ 40 mg/L, chloride ion: 100 $\pm$ 20 mg/L, alkalinity: 200 $\pm$ 40 mg/L, turbidity: less than 1 NTU) obtained by adding perfluorooctanesulfonic acid (PFOS) and perfluorooctanoic acid (PFOA) to tap water having a total organic matter concentration (TOC) (organic matter concentration converted to carbon (C), measured by a TOC meter) of 0.5 mg/L or less through an activated carbon filter and a hollow fiber membrane so that a concentration of PFOA is 0.0005 $\pm$ 0.00005 mg/L and a concentration of PFOS is 0.001 $\pm$ 0.00010 mg/L is used as adjusted raw water. The adjusted raw water is continuously passed through the filter loaded in the stainless steel housing at a filtration flow rate of 2 L/min, and the concentrations of PFOS and PFOA before and after passing through the filter are quantitatively measured by solid phase extraction-liquid chromatography-mass spectrometry. A point at which a total concentration in water of PFOS and PFOA in outflow water is 0.00007 mg/L or more is defined as a breakthrough point, and a total filtered water amount (L) until the breakthrough point is determined. A value obtained by dividing the obtained total filtered water amount (L) by a volume ($cm^3$) of the activated carbon molded body constituting the filter is taken as a filtered water amount ($L/cm^3$) per 1 $cm^3$ of the activated carbon molded body constituting the filter.

3. The filter according to claim 1 or 2, which is used for removing a fluorine-containing organic compound in water to be treated.

4. A method for removing a fluorine-containing organic compound, the method including a step of removing a fluorine-containing organic compound in water to be treated containing a fluorine-containing organic compound by passing the water to be treated through a filter including an activated carbon molded body containing activated carbon, in which among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter of 3.0 to 3.5 nm.

5. Use of a filter for removing a fluorine-containing organic compound in water to be treated, the filter including an activated carbon molded body containing activated carbon, in which among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter in a range of 3.0 to 3.5 nm.

6. Use of an activated carbon molded body for producing a fluorine-containing organic compound removing filter, the activated carbon molded body containing activated carbon, in which among pore volumes calculated by a QSDFT method, the activated carbon molded body has a pore volume A (cc/g) of 0.30 cc/g or more of pores having a pore diameter of 2.0 nm or less, and has a pore volume B (cc/g) of 0.01 cc/g or more of pores having a pore diameter in a range of 3.0 to 3.5 nm.

FIG. 1

FIG. 2

FIG. 3

FIG. 4

FIG. 5

FIG. 6

FIG. 7

FIG. 8

FIG. 9

FIG. 10

FIG. 11

## INTERNATIONAL SEARCH REPORT

| International application No. |
| --- |
| **PCT/JP2024/002016** |

| A. | CLASSIFICATION OF SUBJECT MATTER |
| --- | --- |

*C02F 1/28*(2023.01)i; *B01J 20/20*(2006.01)i
FI: C02F1/28 D; B01J20/20 A

According to International Patent Classification (IPC) or to both national classification and IPC

| B. | FIELDS SEARCHED |
| --- | --- |

Minimum documentation searched (classification system followed by classification symbols)

C02F1/28; B01J20/20-20/28; B01J20/30-20/34

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2020-110801 A (AD'ALL COMPANY, LIMITED) 27 July 2020 (2020-07-27) claims, paragraphs [0001], [0010], [0016], examples | 1-2 |
| Y | claims, paragraphs [0001], [0010], [0016], examples | 3-6 |
| Y | WO 2022/255249 A1 (FUTAMURA KAGAKU K.K.) 08 December 2022 (2022-12-08) paragraphs [0004], [0034] | 3-6 |
| A | JP 2020-124714 A (AD'ALL COMPANY, LIMITED) 20 August 2020 (2020-08-20) claims | 1-6 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 March 2024** | **19 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/002016**

| Patent document cited in search report | | | Publication date (day/month/year) | Patent family member(s) | | | Publication date (day/month/year) |
|---|---|---|---|---|---|---|---|
| JP | 2020-110801 | A | 27 July 2020 | US | 2021/0261441 | A1 | |
| | | | | claims, paragraphs [0001], [0011], [0025], examples | | | |
| | | | | WO | 2019/244903 | A1 | |
| | | | | EP | 3812348 | A1 | |
| WO | 2022/255249 | A1 | 08 December 2022 | (Family: none) | | | |
| JP | 2020-124714 | A | 20 August 2020 | US | 2021/0261442 | A1 | |
| | | | | claims | | | |
| | | | | WO | 2019/244905 | A1 | |
| | | | | EP | 3812349 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022085550 A

**Non-patent literature cited in the description**

- *Regarding Partial Amendment to Ministerial Ordinance Concerning Water Quality Standards (Enforcement Notice)*, 30 March 2020, vol. 0330 (1)

- **LABOUR** ; **WELFARE**. *Method for inspecting water quality management target setting item*, 10 October 2003, vol. 1010001